# DEMANDE DE BREVET EUROPEEN

(11) **EP 2 327 587 A1**
(43) Date de publication de la demande: **01.06.2011**
(21) Numéro de dépôt: 09306150.5
(22) Date de dépôt: 27.11.2009
(51) Int. Cl.: B60R 9/042

(54) **Dispositif de chargement/déchargement d'un objet sur/à partir du toit d'un véhicule.**

(71) Demandeur: Sibille Outillage, 26780 Malataverne (FR)
(72) Inventeur: Berbon, Jean-François, F-26290, LES GRANGES GONTARDES (FR); Schlegel, Daniel, F-90360, LACHAPELLE SOUS ROUGEMONT (FR); Gete, Eric, F-70400, VERLANS (FR); Weite, Pierre-Alain, F-25700, VALENTIGNEY (FR)
(74) Mandataire: Rhein, Alain

(57) **Abrégé**

L'invention concerne un dispositif (1) pour le chargement/déchargement d'au moins un objet sur/à partir du toit d'un véhicule, ce dispositif (1) comportant un châssis (2) monté sur le toit du véhicule, au moins un bras pivotant (3) monté en pivotement sur le châssis (2) entre une position repliée et une position dépliée par rapport à ce châssis (2), au moins un bras coulissant (5) monté en coulissement par rapport au bras pivotant (3) entre une position escamotée et une position déployée par rapport à ce bras pivotant (3) et pourvu d'au moins un moyen (7) pour recevoir ledit objet à charger/décharger, et des moyens (8) pour commander le pivotement du bras pivotant (3) ainsi que le coulissement du bras coulissant (5).

Ce dispositif (1) est caractérisé en ce que les moyens de commande (8) comportent un moyen (80) pour raccorder le châssis (2) au bras coulissant (5), un moyen (81) d'enroulement/déroulement du moyen de raccordement (80) et au moins un moyen élastique (82) pour repousser ce bras pivotant (3) en position dépliée.

## Description

La présente invention a trait à un dispositif pour le chargement/déchargement d'au moins un objet sur/à partir du toit d'un véhicule.

Cette invention concerne le domaine de la fabrication des équipements, destinés à être montés sur le toit d'un véhicule, notamment de type utilitaire, prévus pour recevoir un objet et conçus, d'une part, pour charger un tel objet sur le toit de ce véhicule avant de partir en intervention avec ce véhicule ou après une telle intervention et, d'autre part, pour décharger un tel objet à partir du toit du véhicule notamment sur un site d'intervention et au moment de procéder à une telle intervention.

De tels dispositifs sont conçus pour permettre à un opérateur de charger/décharger un objet tout en restant au sol et en évitant à cet opérateur d'intervenir en hauteur, plus particulièrement en grimpant sur le toit d'un véhicule, ceci avec les risques que cela représente.

On connaît, d'ores et déjà, une pluralité de dispositifs de chargement/déchargement permettant d'atteindre cet objectif.

En particulier, on connaît un dispositif de chargement/déchargement comportant, d'une part, un châssis monté fixement sur le toit d'un véhicule, d'autre part, une structure mobile par rapport à ce châssis et, d'autre part encore, un moyen pour la commande du déplacement de cette structure mobile par rapport au châssis.

En fait, ce moyen de commande est constitué, d'une part, par un treuil monté fixement sur le châssis et, d'autre part, par une sangle comportant une première extrémité raccordée à ce treuil pour son enroulement/déroulement ainsi qu'une seconde extrémité raccordée à la structure mobile.

Cette structure mobile comporte, alors, des bras dont certains sont susceptibles de se déplacer en coulissement et en pivotement par rapport à des rails que comporte le châssis et dont d'autres, de type télescopique, d'une part, sont pourvus d'un moyen pour la réception d'un objet à charger/décharger, d'autre part, sont raccordés à ladite sangle et, d'autre part encore, sont susceptibles de coulisser par rapport aux bras coulissants/pivotants.

A ce propos, on observera que les rails de la structure mobile sont inclinés par rapport à l'horizontale d'un angle déterminé de manière à permettre un déplacement des bras de cette structure par rapport aux rails du châssis sous l'effet de la seule gravité de la pesanteur.

Le moyen de commande autorise, alors, d'une part, le déchargement d'un objet en retenant simplement la structure avec une force sensiblement inférieure à la composante de la force exercée par la gravité et, d'autre part, le chargement en exerçant une traction sur cette structure avec une force de traction sensiblement supérieure à la composante de la force exercée par la gravité.

Un tel dispositif présente, cependant, un certain nombre d'inconvénients.

Un premier inconvénient résulte de l'inclinaison, par rapport à l'horizontale, des rails qui confère au dispositif une hauteur qui, cumulée avec la hauteur du véhicule, peut dépasser la hauteur maximale admissible pour un tel véhicule ou permise, soit pour le passage d'ouvrages d'art ou de portiques, soit pour garer le véhicule dans un local.

Un autre inconvénient consiste en ce que, pour limiter la hauteur du dispositif, l'inclinaison des rails est limitée ce qui, en cas de grippage du mécanisme ou en présence de saletés dans les rails (feuilles, branchages, déchets ou autres), rend plus difficile (voire impossible) le déchargement sous l'effet de la gravité.

On remarquera, également, que, pour des raisons d'encombrement du dispositif par rapport à la carrosserie du véhicule, l'extrémité des rails du châssis se situe en retrait par rapport à la verticale de cette carrosserie ce qui, en position de déchargée de la structure, aurait pour effet d'amener cette structure directement en contact avec la carrosserie occasionnant à celle-ci des dégradations. Une solution a été trouvée en équipant l'extrémité des bras pivotants/coulissants de cette structure avec une roulette qui vient rouler sur la carrosserie du véhicule. Cependant, cette solution est imparfaite car, en raison du poids de l'ensemble structure-échelle, cette roulette, au mieux laisse des traces de son passage au niveau de la carrosserie, au pire dégrade quand même cette dernière.

On connaît, encore, par le document FR-2.680.736, un dispositif de porte-échelle à commande desmodromique. Un tel dispositif comporte un châssis monté sur le toit d'un véhicule ainsi qu'une première console montée en pivotement sur ce châssis. Ce dispositif comporte, encore, d'une part, un premier bras coulissant monté en coulissement par rapport à ladite première console et, d'autre part, un deuxième bras coulissant monté en coulissement sur une deuxième console équipant le premier bras et pourvu d'un moyen pour la réception d'un échelle.

Ce dispositif comporte, encore, un moyen pour commander le chargement/déchargement de l'échelle, ce moyen de commande comportant un bras pivotant (interposé entre le châssis et un premier bras coulissant), une pluralité d'arbres de commande, de boîtes d'engrenages réducteurs, d'engrenages, de roues à chaîne et de chaînes conçus et agencés pour commander le chargement/déchargement de l'échelle de manière desmodromique.

On observera qu'un tel moyen de commande comporte de nombreuses pièces et présente une structure particulièrement complexe ce qui alourdit considérablement le dispositif, complexifie le montage et le réglage des différentes pièces mobiles les unes par rapport aux autres et augmente le risque de défaillance de l'une d'entre elles. De plus, la présence d'engrenages, d'arbres et de chaînes, d'une part, nécessite un entretien régulier du dispositif et un remplacement fréquent des pièces d'usure et, d'autre part, rend ce dispositif particulièrement sensible à la présence de saletés qui grippent le mécanisme le rendant inopérant.

La présente invention se veut à même de remédier aux inconvénients des dispositifs de l'état de la technique.

A cet effet, l'invention concerne un dispositif pour le chargement/déchargement d'au moins un objet sur/à partir du toit d'un véhicule, ce dispositif comportant :
- un châssis destiné à être monté sur le toit du véhicule;
- au moins un bras pivotant monté en pivotement sur le châssis entre une position repliée sur ce châssis et une position dépliée par rapport à ce châssis ;
- au moins un bras coulissant, monté en coulissement par rapport au bras pivotant entre une position escamotée par rapport à ce bras pivotant et une position déployée par rapport à ce bras pivotant, et pourvu d'au moins un moyen pour recevoir ledit objet à charger/décharger ;
- des moyens pour commander le pivotement du bras pivotant par rapport au châssis ainsi que le coulissement du bras coulissant par rapport au bras pivotant.

Ce dispositif est caractérisé par le fait que les moyens de commande sont conçus pour assurer :
- un chargement de l'objet en deux phases dont, d'une part, une première phase au cours de laquelle le bras pivotant est maintenu en position dépliée par rapport au châssis alors que le bras coulissant est amené d'une position déployée dans une position escamotée par rapport à ce bras pivotant et, d'autre part, une deuxième phase au cours de laquelle le bras coulissant est maintenu en position escamotée par rapport au bras pivotant alors que ce bras pivotant est amené d'une position dépliée dans une position repliée par rapport au châssis ;
- un déchargement de l'objet en deux phases dont, d'une part, une première phase au cours de laquelle le bras coulissant est maintenu en position escamotée par rapport au bras pivotant alors que ce bras pivotant est amené d'une position repliée dans une position dépliée par rapport au châssis et, d'autre part, une deuxième phase au cours de laquelle le bras pivotant est maintenu en position dépliée par rapport au châssis alors que le bras coulissant est amené d'une position escamotée dans une position déployée par rapport au bras pivotant.

Un premier avantage du dispositif conforme à l'invention concerne le chargement/déchargement d'un objet en deux phases. En effet, la conception de ce dispositif permet, dans une première phase de déchargement de cet objet, d'amener le bras pivotant dans une position dépliée dans laquelle ce bras pivotant présente, par rapport à l'horizontale, une inclinaison considérablement supérieure (proche de la verticale) à celle des dispositifs de l'état de la technique. De plus et pendant cette première phase de déchargement, le bras coulissant est maintenu dans sa position escamotée. Dans une deuxième phase de déchargement, le bras coulissant est déployé depuis sa position escamotée jusqu'à sa position déployée, ceci alors que le bras pivotant est maintenu dans sa position dépliée ce qui, étant donné la forte inclinaison du bras pivotant, facilite grandement le déploiement du bras coulissant sous l'effet de la seule gravité.

Un autre avantage consiste en ce que, en position de chargement d'un objet, le bras pivotant, dans sa position complètement dépliée, est replié sur le châssis dans une position sensiblement horizontale ce qui permet, avantageusement, de réduire de manière substantielle la hauteur du dispositif par rapport aux dispositif de l'état de la technique.

Encore un autre avantage consiste en ce que le dispositif comporte des moyens de commande constitués par un moyen de raccordement (plus particulièrement une sangle), par un moyen d'enroulement/déroulement de ce moyen de raccordement (plus particulièrement un treuil, notamment manuel et/ou électrique) ainsi qu'un moyen élastique de répulsion (plus particulièrement un vérin) du bras pivotant. Ce moyen de commande est, alors, constitué par un nombre limité de pièces dont la conception, l'agencement et la fiabilité garantissent un fonctionnement facilité, pérenne, sans grand entretien et peu sensible à la présence de saletés.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels:
- la figure 1 est une vue schématisée et en perspective du dispositif conforme à l'invention, monté sur le toit d'un véhicule, en position repliée de ce dispositif et de chargement de l'objet sur le toit de ce véhicule ;
- la figure 2 est une vue schématisée correspondant à un détail de la figure 1 illustrant l'extrémité des bras ;
- la figure 3 est une vue similaire à la figure 1 et illustre le dispositif en position dépliée du bras pivotant et escamotée du bras coulissant ;

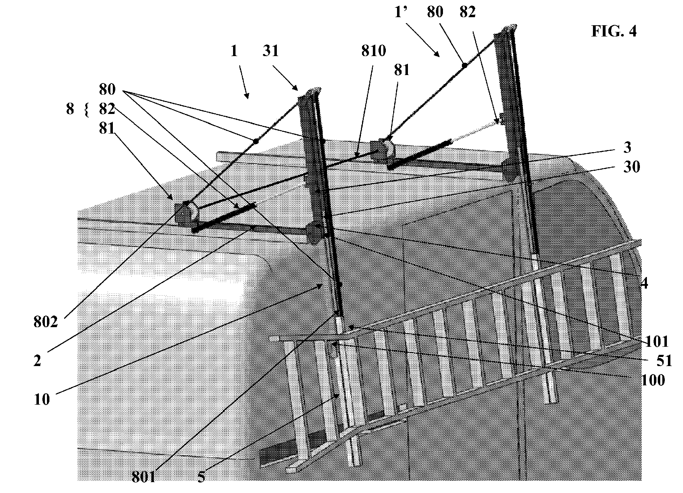

- la figure 4 est une vue similaire à la précédente et illustre le dispositif en position dépliée du bras pivotant, déployée du bras coulissant, et de déchargement de l'objet.

La présente invention concerne le domaine de la fabrication des équipements destinés à être montés sur le toit d'un véhicule, notamment de type utilitaire, plus particulièrement une camionnette.

En fait, la présente invention concerne, alors, plus particulièrement, un dispositif 1, prévu pour recevoir au moins un objet (notamment de grande longueur, plus particulièrement une ou plusieurs échelles), et conçu, d'une part, pour le chargement d'au moins un tel objet sur le toit d'un véhicule et, d'autre part, pour le déchargement d'au moins un tel objet à partir du toit de ce véhicule.

De manière connue, un tel dispositif 1 comporte un châssis 2 destiné à être monté sur le toit du véhicule, plus particulièrement par l'intermédiaire de moyens de montage que comporte un tel châssis 2 et qui coopèrent avec des moyens de montage complémentaires équipant usuellement le pavillon d'un tel véhicule.

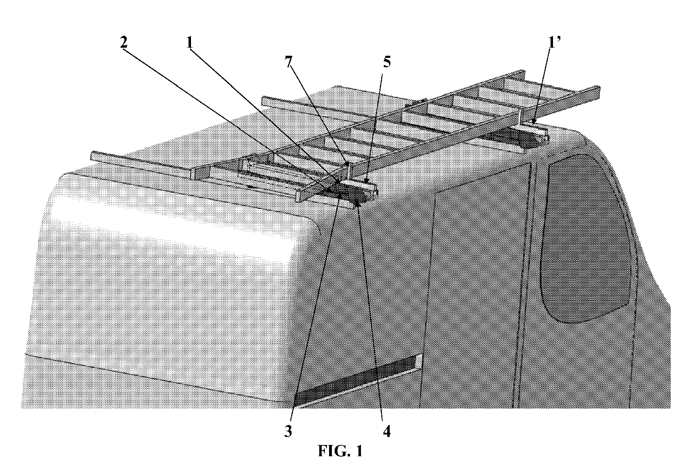

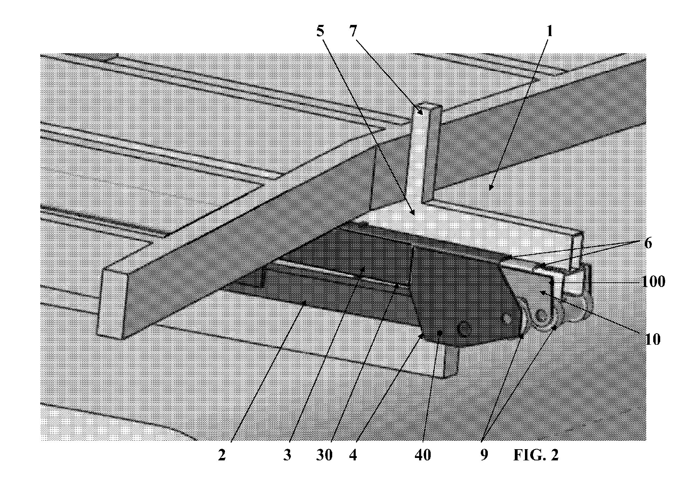

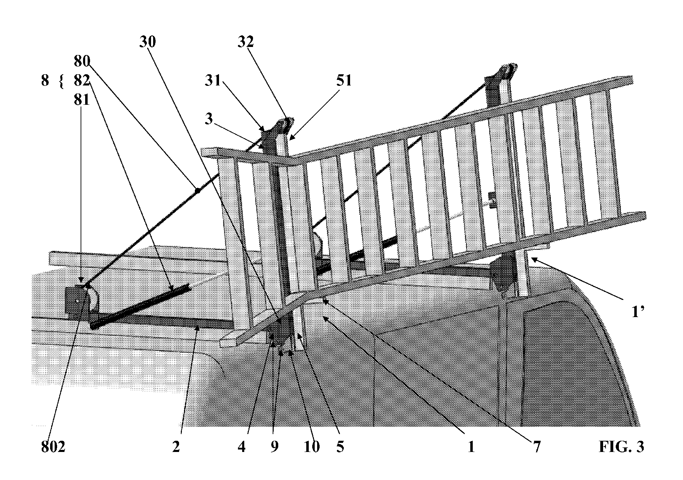

Un tel dispositif 1 comporte, encore, au moins un bras pivotant 3 monté en pivotement sur le châssis 2, ceci entre une position repliée sur ce châssis 2 (figure 1) et une position dépliée par rapport à ce châssis (figures 2 et 3). Ce dispositif 1 comporte, alors, également, un moyen 4 pour le montage en pivotement d'un tel bras pivotant 3 sur le châssis 2.

Ledit dispositif 1 comporte, de plus, au moins un bras coulissant 5, monté en coulissement par rapport au bras pivotant 3, ceci entre une position escamotée par rapport à ce bras pivotant 3 (figures 1 et 2) et une position déployée par rapport à ce bras pivotant 3 (figure 3). Pour ce faire, ledit dispositif 1 comporte, alors, également, un moyen 6 pour le montage en coulissement d'un tel bras coulissant 5 par rapport au bras pivotant 3.

Une autre caractéristique consiste en ce que ce bras coulissant 5 est pourvu d'au moins un moyen 7 pour recevoir ledit objet à charger/décharger. Un tel moyen de réception 7 peut adopter la forme d'un moyen pour accrocher (plus particulièrement sous forme d'un crochet ou analogue) un tel objet, éventuellement complété par un moyen pour fixer et/ou pour immobiliser (plus particulièrement sous forme d'une sangle à boucle de sécurité) un tel objet par rapport au bras coulissant 5.

Le dispositif 1 comporte, également, des moyens 8 pour commander le pivotement du bras pivotant 3 par rapport au châssis 2 ainsi que le coulissement du bras coulissant 5 par rapport au bras pivotant 3.

Selon l'invention, les moyens de commande 8 sont conçus pour assurer :
- un chargement de l'objet en deux phases dont, d'une part, une première phase au cours de laquelle le bras pivotant 3 est maintenu en position dépliée par rapport au châssis 2 alors que le bras coulissant 5 est amené d'une position déployée dans une position escamotée par rapport à ce bras pivotant 3 et, d'autre part, une deuxième phase au cours de laquelle le bras coulissant 5 est maintenu en position escamotée par rapport au bras pivotant 3 alors que ce bras pivotant 3 est amené d'une position dépliée dans une position repliée par rapport au châssis 2 ;
- un déchargement de l'objet en deux phases dont, d'une part, une première phase au cours de laquelle le bras coulissant 5 est maintenu en position escamotée par rapport au bras pivotant 3 alors que ce bras pivotant 3 est amené d'une position repliée dans une position dépliée par rapport au châssis 2 et, d'autre part, une deuxième phase au cours de laquelle le bras pivotant 3 est maintenu en position dépliée par rapport au châssis 2 alors que le bras coulissant 5 est amené d'une position escamotée dans une position déployée par rapport au bras pivotant 3.

Pour ce faire et selon une autre caractéristique de l'invention, ces moyens de commande 8 comportent, d'une part, un moyen 80 pour raccorder le châssis 2 au bras coulissant 5 et, d'autre part, un moyen 81 pour enrouler/dérouler ce moyen de raccordement 80.

En ce qui concerne ledit moyen de raccordement 80, celui-ci comporte, d'une part, une première extrémité 801 rendue solidaire dudit bras coulissant 5 et, d'autre part, une deuxième extrémité 802 rendue solidaire dudit moyen d'enroulement/déroulement 81.

Un tel moyen de raccordement 80 est constitué par une chaîne ou, et de préférence, par une sangle.

En ce qui concerne ledit moyen d'enroulement/déroulement 81, celui-ci est monté sur le châssis 2 du dispositif 1 et adopte, de préférence, la forme d'un treuil ou analogue.

Ce treuil est complété par un organe d'actionnement que comporte le dispositif 1 et qui peut être, selon le cas, de type manuel (plus particulièrement sous forme d'une manivelle ou analogue) ou encore (et de préférence) de type motorisé (plus particulièrement sous forme d'un moteur hydraulique ou, et de préférence, électrique) et actionné à distance, notamment de l'intérieur du véhicule ou par le biais d'une télécommande filaire.

Finalement, lesdits moyens de commande 8 comportent au moins un moyen élastique 82, interposé entre le châssis 2 et le bras pivotant 3, et conçu pour repousser ce bras pivotant 3 en position dépliée.

Selon un mode de réalisation préféré de l'invention, un tel moyen élastique 82 comporte au moins un vérin 820 présentant, d'une part, une première extrémité rendue solidaire (plus particulièrement en pivotement) du châssis 2 et, d'autre part, une deuxième extrémité rendue solidaire (plus particulièrement en pivotement) du bras pivotant 3.

En fait, un tel vérin 820 peut être de type hydraulique ou électrique. Cependant, un tel vérin 820 est, de préférence, de type pneumatique (plus particulièrement à gaz) ou à ressort (plus particulièrement de compression).

Un autre mode de réalisation non représenté consiste en ce qu'un tel moyen élastique 82 comporte au moins un ressort de compression interposé entre le châssis 2 et le bras pivotant 3.

A ce propos, on observera que, dans un pareil mode de réalisation, un tel moyen élastique 82 comporte, en fait, d'une part, une tige de guidage mobile (en pivotement et/ou en coulissement) par rapport au châssis 2 et au bras pivotant 3 et, d'autre part, un ressort de compression engagé autour de la tige mobile.

Plus particulièrement, une telle tige mobile comporte, d'une part, une première extrémité montée en pivotement sur le châssis 2 et, d'autre part, une deuxième extrémité montée en pivotement et en coulissement par rapport au bras pivotant 3, notamment montée en coulissement par rapport à une console montée en pivotement sur le bras pivotant 3, plus particulièrement à proximité d'une extrémité de ce bras pivotant 3 (opposée à celle montée en pivotement sur le châssis 2).

En fait, un tel moyen élastique 82 est, plus particulièrement, conçu pour repousser ledit bras pivotant 3 (ainsi qu'au moins le bras coulissant 5 escamoté à l'intérieur dudit bras pivotant 3, l'objet à charger/décharger, voire encore un bras intermédiaire tel qu'exposé ci-dessous) en position dépliée, ceci à l'encontre d'une action exercée par la gravité de la pesanteur au moins sur ce bras pivotant 3 (ainsi qu'au moins sur le bras coulissant 5 escamoté, ledit objet, voire ledit bras intermédiaire).

La présence de ces moyens de commande 8 permet, alors, lors du déchargement d'un objet :
- pendant une première phase de déchargement de cet objet, depuis la position repliée et jusqu'à la position dépliée du bras pivotant 3, au moyen de raccordement 80 et au moyen d'enroulement/déroulement 81 de s'opposer à l'action du moyen élastique 82 et de retenir le bras coulissant 5 en position escamotée, ceci à l'encontre des effets de la gravité ;
- pendant une deuxième phase de déchargement de l'objet, en position dépliée du bras pivotant 3 dans laquelle le bras coulissant 5 est soumis librement à la gravité, depuis la position escamotée et jusqu'à la position déployée du bras coulissant 5, au moyen de raccordement 80 et au moyen d'enroulement/déroulement 81 de retenir le bras coulissant 5, ceci à l'encontre des effets de la gravité.

La présence de ces moyens de commande 8 permet, également et lors du chargement d'un objet :
- pendant une première phase de chargement de cet objet, en position dépliée du bras pivotant 3 dans laquelle le bras coulissant 5 est soumis librement aux effets de la gravité, depuis la position déployée et jusqu'à la position escamotée du bras coulissant 5, au moyen de raccordement 80 et au moyen d'enroulement/déroulement 81 d'exercer une traction sur le bras coulissant 5, ceci à l'encontre des effets de la gravité ;
- pendant une deuxième phase de chargement de l'objet, depuis la position dépliée et jusqu'à la position repliée du bras pivotant 3, au moyen de raccordement 80 et au moyen d'enroulement/déroulement 81 de maintenir le bras coulissant 5 en position escamotée et d'exercer une traction sur le bras pivotant 3, ceci à l'encontre de l'action du moyen élastique 82 pour repousser ce bras pivotant 3.

En ce qui concerne ce bras pivotant 3, celui-ci comporte une première extrémité 30 à proximité de laquelle ce bras pivotant 3 est monté en pivotement sur le châssis 2, ceci par l'intermédiaire du moyen de montage en pivotement 4 adoptant la forme d'une console 40 ou analogue, équipant ce bras pivotant 3 (plus particulièrement la première extrémité 30 de ce bras pivotant 3), et montée en pivotement sur ledit châssis 2.

En fait et tel que visible sur les figures en annexe un tel montage en pivotement est, de préférence, assuré à proximité de l'extrémité 20 d'une traverse 21, que comporte ce châssis 2, qui s'étend de manière transversale par rapport à la direction d'extension du véhicule, et qui est fixée (directement ou indirectement) sur le toit de ce véhicule. C'est, également, d'une telle traverse 21 que ledit moyen d'enroulement/déroulement 81 et/ou ledit moyen élastique 82 peuvent, avantageusement, être rendus solidaires.

Ce bras pivotant 3 comporte, également, une deuxième extrémité 31 pourvue d'un moyen 32 pour le renvoi du moyen de raccordement 80 en direction, d'un côté, du moyen de d'enroulement/déroulement 81 et, de l'autre côté, du bras coulissant 5.

Selon une autre caractéristique de la présente invention, le dispositif 1 comporte, encore, un moyen pour limiter la course angulaire du bras pivotant 3, ceci en position dépliée de ce bras pivotant 3.

Un tel moyen de limitation, d'une part, est associé au châssis 2 et/ou au bras pivotant 3 et/ou au moyen de montage 4 en pivotement susmentionné et, d'autre part, peut adopter la forme d'une butée ou, et de préférence, d'une rotule d'arrêt.

Selon une caractéristique additionnelle de l'invention, ce moyen de limitation de la course angulaire et le moyen 4 de montage en pivotement susmentionnés sont agencés en sorte que, en position de déchargement de l'objet (et, donc, en position dépliée du bras pivotant 3 et en position déployée du bras coulissant 5), au moins les bras pivotant 3 et coulissant 5 (ainsi qu'un bras intermédiaire 10 décrit ci-dessous) sont positionnés à distance de la carrosserie du véhicule.

Pour ce faire, le moyen pour limiter la course angulaire du bras pivotant 3 limite cette course angulaire, par rapport à l'horizontale et par rapport à la position repliée de ce bras pivotant 3, à un angle compris entre 80 et 90°, de préférence de l'ordre de 85°.

De plus et en ce qui concerne le moyen de montage en pivotement 4, celui-ci est conçu en sorte que l'axe de pivotement du bras pivotant 3 soit confondu ou déporté extérieurement au véhicule, ceci par rapport à une tangente verticale à la carrosserie du véhicule.

Selon une caractéristique additionnelle, le dispositif 1 conforme à l'invention peut, encore, comporter un moyen pour initier un pivotement du bras pivotant 3, ceci à partir de sa position repliée vers sa position dépliée.

Ce moyen pour initier un tel pivotement peut être constitué par un ressort de compression, interposé entre le châssis 2 et le bras pivotant 3, et conçu pour exercer un couple de répulsion supérieur à celui exercé par le moyen 82 pour repousser ce bras pivotant 3 et que comporte le moyen de commande 8.

Tel que mentionné ci-dessus, le dispositif 1 comporte au moins un bras pivotant 3 et un bras coulissant 5.

Selon un premier mode de réalisation, un tel bras coulissant 5 coulisse uniquement à l'intérieur et par rapport au bras pivotant 3.

Ce bras pivotant 3 adopte, alors, la forme d'une glissière recevant intérieurement le bras coulissant 5 et présentant une section en « C », ceci en sorte d'être pourvue d'une fente longitudinale orientée vers l'extérieur du véhicule et au travers de laquelle s'étend le moyen 7 de réception de l'objet.

Une caractéristique additionnelle consiste en ce que ce bras pivotant 3 et/ou ce bras coulissant 5 comportant des moyens de roulement 9 destinés à coopérer avec ce bras coulissant 5 ou ce bras pivotant 3.

En fait, c'est, plus particulièrement, ce bras pivotant 3 qui comporte de tels moyens de roulement 9, implantés à proximité de sa première extrémité 30 (c'est-à-dire l'extrémité 30 du bras pivotant 3 montée en pivotement sur le châssis 2), intérieurement et/ou extérieurement à la glissière de ce bras pivotant 3, et adoptant la forme d'au moins un galet de roulement.

Selon un mode préféré de réalisation, ce bras pivotant 3 comporte, en fait, des moyens de roulement 9, implantés extérieurement à ce bras pivotant 3, à proximité du débouché de la glissière de ce bras pivotant 3, dans le prolongement de cette glissière, et adoptant la forme d'au moins un galet, notamment conformé en rouleau.

De manière additionnelle, ce bras pivotant 3 peut, encore, comporter des moyens de roulement 9, implantés intérieurement à ce bras pivotant 3, à proximité du débouché de la glissière de ce bras pivotant 3, et adoptant la forme d'au moins deux galets, de préférence d'au moins deux paires de galets, positionnés de part et d'autre du bras coulissant 5.

De manière alternative ou complémentaire, ledit bras coulissant 5 peut, lui aussi, comporter des moyens de roulement 9 qui peuvent, alors, être constitués par au moins deux galets (de préférence au moins deux paires de galets), positionnés de part et d'autre de ce bras coulissant 5, équipant extérieurement ce bras coulissant 5 (plus particulièrement la deuxième extrémité de ce bras coulissant 5 toujours positionnée à l'intérieur du bras pivotant 3, ceci quelle que soit la position, escamotée ou déployée, de ce bras coulissant 5), et positionnés intérieurement au bras pivotant 3.

Cependant et tel que visible sur les figures en annexe, le dispositif 1 comporte, de préférence, un bras pivotant 3, un bras coulissant 5 ainsi qu'un bras intermédiaire 10.

Ce bras intermédiaire 10 est monté en coulissement par rapport au bras pivotant 3 (ceci par l'intermédiaire d'un moyen de montage en coulissement), interposé entre ce bras pivotant 3 et le bras coulissant 5 qui est, quant à lui, monté en coulissement par rapport à ce bras intermédiaire 10 (là encore par l'intermédiaire d'un moyen de montage en coulissement).

Tout comme le bras pivotant 3, ce bras intermédiaire 10 adopte la forme d'une glissière présentant une section en « C », ceci en sorte d'être pourvue d'une fente longitudinale orientée vers l'extérieur du véhicule et au travers de laquelle s'étend le moyen 7 de réception de l'objet.

En ce qui concerne ce bras pivotant 3, celui-ci 3 reçoit intérieurement et en coulissement le bras intermédiaire 10, ce bras pivotant 3 et/ou ce bras intermédiaire 10 comportant des moyens de roulement 9 destinés à coopérer avec ce bras intermédiaire 10 ou ce bras pivotant 3.

A ce propos, on observera que c'est, plus particulièrement, le bras pivotant 3 qui comporte de tels moyens de roulement 9, implantés à proximité de sa première extrémité 30, intérieurement et/ou extérieurement à la glissière de ce bras pivotant 3, et adoptant la forme d'au moins un galet de roulement.

Là encore et selon un mode de réalisation préféré, ce bras pivotant 3 comporte des moyens de roulement 9, implantés extérieurement à ce bras pivotant 3, à proximité du débouché de la glissière de ce bras pivotant 3, dans le prolongement de cette glissière, et adoptant la forme d'au moins un galet, notamment conformé en rouleau.

De manière additionnelle, ce bras pivotant 3 peut, encore, comporter des moyens de roulement 9, implantés intérieurement à ce bras pivotant 3, à proximité du débouché de la glissière de ce bras pivotant 3, et adoptant la forme d'au moins deux galets, de préférence d'au moins deux paires de galets, positionnés de part et d'autre du bras intermédiaire 10.

De manière alternative ou complémentaire, ledit bras intermédiaire 10 peut, lui aussi, comporter des moyens de roulement 9 qui peuvent, alors, être constitués par au moins deux galets (de préférence au moins deux paires de galets), positionnés de part et d'autre de ce bras intermédiaire 10, équipant extérieurement ce bras intermédiaire 10 (plus particulièrement la deuxième extrémité 101 de ce bras intermédiaire 10 toujours positionnée à l'intérieur du bras pivotant 3, ceci quelle que soit la position, escamotée ou déployée, de ce bras intermédiaire 10) , et positionnés intérieurement au bras pivotant 3.

En ce qui concerne ledit bras intermédiaire 10, celui-ci 10 reçoit intérieurement et en coulissement le bras coulissant 5, ce bras intermédiaire 10 et/ou ce bras coulissant 5 comportant des moyens de roulement 9 destinés à coopérer avec ce bras coulissant 5 ou ce bras intermédiaire 10.

A ce propos, on observera que c'est, plus particulièrement, le bras intermédiaire 10 qui comporte de tels moyens de roulement 9, implantés à proximité de la première extrémité 100 de ce bras intermédiaire 10 (susceptible de s'étendre hors du bras pivotant 3 lors du déploiement de ce bras intermédiaire 10), intérieurement et/ou extérieurement à la glissière du bras intermédiaire 10, et adoptant la forme d'au moins un galet de roulement.

Là encore et selon un mode de réalisation préféré, ce bras intermédiaire 10 comporte des moyens de roulement 9, implantés extérieurement à ce bras intermédiaire 10, à proximité du débouché de la glissière de ce bras intermédiaire 10, dans le prolongement de cette glissière, et adoptant la forme d'au moins un galet, notamment conformé en rouleau.

De manière additionnelle, ce bras intermédiaire 10 peut, encore, comporter des moyens de roulement 9, implantés intérieurement à ce bras intermédiaire 10, à proximité du débouché de la glissière de ce bras intermédiaire 10, et adoptant la forme d'au moins deux galets, de préférence d'au moins deux paires de galets, positionnés de part et d'autre du bras coulissant 5.

De manière alternative ou complémentaire, ledit bras coulissant 5 peut, lui aussi, comporter des moyens de roulement 9 qui peuvent, alors, être constitués par au moins deux galets (de préférence au moins deux paires de galets), positionnés de part et d'autre de ce bras coulissant 5, équipant extérieurement ce bras coulissant 5 (plus particulièrement la deuxième extrémité 51 de ce bras coulissant 5 dont une partie au moins est toujours positionnée à l'intérieur du bras intermédiaire 10, ceci quelle que soit la position, escamotée ou déployée, de ce bras coulissant 5), et positionnés intérieurement au bras intermédiaire 10.

On observera que le dispositif conforme à la présente invention trouvera une application lorsqu'il s'agit de charger/décharger un objet sur le toit d'un véhicule, ceci par l'arrière de ce véhicule.

Cependant et selon un mode de réalisation préféré de l'invention, ce dispositif 1 trouvera une application particulièrement appropriée lorsqu'il s'agit de procéder à un chargement/déchargement d'un tel objet latéralement par rapport à un tel véhicule comme illustré sur les figures en annexe.

Une autre caractéristique consiste en ce qu'un tel véhicule comporte au moins un dispositif 1 de chargement/déchargement conforme à la présente invention.

En fait, un tel véhicule peut comporter deux de ces dispositifs (1 ; 1') implantés pour l'un (1') en partie avant et pour l'autre (1) en partie arrière de ce véhicule comme illustré sur les figures en annexe.

Dans un pareil cas, ces deux dispositifs (1 ; 1') peuvent alors être implantés individuellement sur le toit du véhicule ou (et de préférence) intégrés dans une unique installation comportant deux de ces dispositifs (1 ; 1') ainsi implantés et faisant également l'objet de la présente invention.

Une telle installation peut, alors, également, comporter un moyen 810 pour le raccordement des moyens d'enroulement/déroulement 81 que comportent ces deux dispositifs (1 ; 1'), soit (individuellement) à un organe (de type manuel ou motorisé) pour leur actionnement, soit (et de préférence) entre eux (par un moyen de raccordement sous forme d'une barre ou analogue), voire encore à un unique organe d'actionnement (là encore de type manuel ou motorisé comme susmentionné).

Une installation comportant deux de ces dispositifs (1 ; 1') est, alors, plus particulièrement appropriée pour le chargement/déchargement d'au moins un objet de grande longueur, comme par exemple une ou plusieurs échelles.

Finalement, on observera que, de manière avantageuse, le dispositif 1 conforme à l'invention est particulièrement compact ce qui est également le cas de l'installation susmentionnée.

Cette compacité permet, avantageusement, de positionner une telle installation sur une partie seulement du toit du véhicule, notamment sur une moitié seulement de ce toit.

Un mode particulier de réalisation consiste, alors, en ce qu'un tel véhicule peut recevoir deux de ces installations, ceci de manière juxtaposée, notamment de part et d'autre d'une ligne médiane le long de laquelle s'étend le véhicule.

Ces deux installations peuvent, alors, être distinctes ou faire l'objet d'un unique système de chargement/déchargement comportant deux de ces installations.

## Revendications

1. Dispositif (1) pour le chargement/déchargement d'au moins un objet sur/à partir du toit d'un véhicule, ce dispositif (1) comportant :
- un châssis (2) destiné à être monté sur le toit du véhicule ;
- au moins un bras pivotant (3) monté en pivotement sur le châssis (2) entre une position repliée sur ce châssis (2) et une position dépliée par rapport à ce châssis (2);
- au moins un bras coulissant (5), monté en coulissement par rapport au bras pivotant (3) entre une position escamotée par rapport à ce bras pivotant (3) et une position déployée par rapport à ce bras pivotant (3), et pourvu d'au moins un moyen (7) pour recevoir ledit objet à charger/décharger ;
- des moyens (8) pour commander le pivotement du bras pivotant (3) par rapport au châssis (2) ainsi que le coulissement du bras coulissant (5) par rapport au bras pivotant (3);
- **caractérisé par le fait que** les moyens de commande (8) sont conçus pour assurer :
- un chargement de l'objet en deux phases dont, d'une part, une première phase au cours de laquelle le bras pivotant (3) est maintenu en position dépliée par rapport au châssis (2) alors que le bras coulissant (5) est amené d'une position déployée dans une position escamotée par rapport à ce bras pivotant (3) et, d'autre part, une deuxième phase au cours de laquelle le bras coulissant (5) est maintenu en position escamotée par rapport au bras pivotant (3) alors que ce bras pivotant (3) est amené d'une position dépliée dans une position repliée par rapport au châssis (2);
- un déchargement de l'objet en deux phases dont, d'une part, une première phase au cours de laquelle le bras coulissant (5) est maintenu en position escamotée par rapport au bras pivotant (3) alors que ce bras pivotant (3) est amené d'une position repliée dans une position dépliée par rapport au châssis (2) et, d'autre part, une deuxième phase au cours de laquelle le bras pivotant (3) est maintenu en position dépliée par rapport au châssis (2) alors que le bras coulissant (5) est amené d'une position escamotée dans une position déployée par rapport au bras pivotant (3).

2. Dispositif (1) de chargement/déchargement selon la revendication 1, **caractérisé par le fait que**:
- les moyens de commande (8) comportent, d'une part, un moyen (80) pour raccorder le châssis (2) au bras coulissant (5) duquel est rendue solidaire une première extrémité (801) de ce moyen de raccordement (80), d'autre part, un moyen (81) d'enroulement/déroulement du moyen de raccordement (80), monté sur le châssis (2), et duquel est rendue solidaire une deuxième extrémité (802) de ce moyen de raccordement (80) et, d'autre part encore, au moins un moyen élastique (82), interposé entre le châssis (2) et le bras pivotant (3), pour repousser ce bras pivotant (3) en position dépliée ;
- pendant une première phase de déchargement d'un objet, depuis la position repliée et jusqu'à la position dépliée du bras pivotant (3), le moyen de raccordement (80) et le moyen d'enroulement/déroulement (81) s'opposent à l'action du moyen élastique (82) pour repousser le bras pivotant (3) et retiennent le bras coulissant (5) en position escamotée, ceci à l'encontre des effets de la gravité ;
- pendant une deuxième phase de déchargement de l'objet, en position dépliée du bras pivotant (3) dans laquelle le bras coulissant (5) est soumis librement à la gravité, depuis la position escamotée et jusqu'à la position déployée du bras coulissant (5), le moyen de raccordement (80) et le moyen d'enroulement/déroulement (81) retiennent le bras coulissant (5), ceci à l'encontre des effets de la gravité.

3. Dispositif (1) de chargement/déchargement selon la revendication 2, **caractérisé par le fait que** le bras pivotant (3) comporte, d'une part, une première extrémité (30) à proximité de laquelle ce bras pivotant (3) est monté en pivotement sur le châssis (2) et, d'autre part, une deuxième extrémité (31) pourvue d'un moyen (32) pour le renvoi du moyen de raccordement (80) en direction du bras coulissant (5) et du moyen d'enroulement/déroulement (81).

4. Dispositif (1) de chargement/déchargement selon l'une quelconque des revendications précédentes, **caractérisé par le fait que** le dispositif (1) comporte un moyen pour limiter la course angulaire du bras pivotant (3), ceci en position dépliée de ce bras pivotant (3).

5. Dispositif (1) de chargement/déchargement selon la revendication 4, **caractérisé par le fait que** le dispositif (1) comporte un moyen (4) pour le montage en pivotement du bras pivotant (3) sur le châssis (2) qui, avec le moyen de limitation de la course angulaire, sont agencés en sorte que, en position de déchargement de l'objet, au moins les bras pivotant (3) et coulissant (5) sont positionnés à distance de la carrosserie du véhicule.

6. Dispositif (1) de chargement/déchargement selon l'une quelconque des revendications 2 ou 3, **caractérisé par le fait que** le moyen de raccordement (80) est constitué par une sangle, une chaîne ou analogue.

7. Dispositif (1) de chargement/déchargement selon l'une quelconque des revendications 2, 3 ou 6, **caractérisé par le fait que** le moyen d'enroulement/déroulement (81) est constitué par un treuil ou analogue.

8. Dispositif (1) de chargement/déchargement selon l'une quelconque des revendications 2, 3, 6 ou 7, **caractérisé par le fait que** le moyen élastique (82) pour repousser le bras pivotant (3) comporte au moins un ressort de compression ou au moins un vérin (820) de type pneumatique ou à ressort.

9. Dispositif (1) de chargement/déchargement selon l'une quelconque des revendications précédentes, **caractérisé par le fait qu'**il comporte un moyen pour initier un pivotement du bras pivotant (3) à partir de sa position repliée vers sa position dépliée.

10. Dispositif (1) de chargement/déchargement selon l'une quelconque des revendications précédentes, **caractérisé par le fait que** le dispositif (1) comporte, entre le bras pivotant (3) et le bras coulissant (5), un bras intermédiaire (10), d'une part, monté en coulissement par rapport au bras pivotant (3) et, d'autre part, par rapport auquel le bras coulissant (5) est monté en coulissement.

11. Dispositif (1) de chargement/déchargement selon la revendication 10, **caractérisé par le fait que** le bras intermédiaire (10) adopte la forme d'une glissière recevant intérieurement le bras coulissant (5), ce bras intermédiaire (10) et/ou ce bras coulissant (5), comportant des moyens de roulement (9) destinés à coopérer avec ce bras coulissant (5) ou ce bras intermédiaire (10).

12. Dispositif (1) de chargement/déchargement selon l'une quelconque des revendications précédentes, **caractérisé par le fait que** le bras pivotant (3) adopte la forme d'une glissière recevant intérieurement le bras coulissant (5), respectivement le bras intermédiaire (10), ce bras pivotant (3) et/ou ce bras coulissant (5), respectivement ce bras intermédiaire (10), comportant des moyens de roulement (9) destinés à coopérer avec ce bras coulissant (5), respectivement ce bras intermédiaire (10), ou ce bras pivotant (3).

13. Dispositif (1) de chargement/déchargement selon l'une quelconque des revendications 10 à 12, **caractérisé par le fait que** le bras pivotant (3) et/ou le bras intermédiaire (10) comportent des moyens de roulement (9), implantés à proximité d'une première extrémité d'un tel bras (3 ; 10), intérieurement et/ou extérieurement à la glissière de ce bras (3 ; 10), et adoptant la forme d'au moins un galet de roulement.

14. Dispositif (1) de chargement/déchargement selon l'une quelconque des revendications 11 à 13, **caractérisé par le fait que** les moyens de roulement (9) sont constitués par au moins deux galets, de préférence au moins deux paires de galets, positionnés de part et d'autre du bras coulissant (5), respectivement du bras intermédiaire (10), et équipant extérieurement ce bras coulissant (5), respectivement ce bras intermédiaire (10), et/ou intérieurement le bras pivotant (3) ou le bras intermédiaire (10), respectivement intérieurement le bras pivotant (3).

15. Installation pour le chargement/déchargement d'au moins un objet sur/à partir du toit d'un véhicule, cette installation comportant deux dispositifs (1 ; 1') conformes aux revendications précédentes et implantés pour l'un (1') en partie avant et pour l'autre (1) en partie arrière du véhicule.
